# EUROPEAN PATENT APPLICATION

(11) **EP 2 418 137 A1**
(43) Date of publication of application: **15.02.2012**
(21) Application number: 10196095.3
(22) Date of filing: 21.12.2010
(51) Int. Cl.: B62B 3/00, B62B 5/06, B62D 7/14, B62D 7/15, B62D 13/04

(54) **Conveying trolley for industrial plants**

(30) Priority: 10.08.2010 IT TO20100693
(71) Applicant: CO.GE.Car S.N.C. di Montano & Sanvido, 10121 Torino (IT)
(72) Inventor: Sanvido, Alessio, 10121, Torino (IT); Sanvido, Dino, 10121, Torino (IT); Montano, Donato, 10121, Torino (IT); Bossotto, Pietro, 10121, Torino (IT)
(74) Representative: Notaro, Giancarlo

(57) **Abstract**

A conveying trolley for industrial plants comprises a supporting structure (3) mounted on a plurality of wheel units (4) pivotable around respective vertical axis. Some of the pivotable wheel units (4) are connected by linkages to a single control plate (5) pivotally mounted around a vertical axis (5a). The control plate (5) can be manoeuvred by a steering unit (8) including a steering plate (11) which is pivotally mounted around the same axis of articulation (5a) of the control plate (5). The steering unit (8) is provided with a vertical rod (12) adapted to be engaged in a hole (11a) of the steering plate (11) and in one from among two holes (14, 15) of the control plate (5) for making the plates (5, 11) integral with the rotation around the axis of articulation (5a) thereof. When the engagement member (12) is inserted into the abovementioned first hole (14), the wheels of the trolley are provided for movement in the normal direction of movement (A), with possibility of steering within a limited angular range. When the engagement rod (12) is introduced into the second hole (15) the steering unit (8) can be manoeuvred for a greater angular range, which allows orienting the wheels of the pivotable units in a direction (T) orthogonal with respect to the direction A. The trolley further comprises one or more wheels, or wheel units, freely pivotable with respect to the supporting structure of the trolley.

## Description

The present invention refers to trolleys for conveying pieces or components in industrial plants, of the type comprising a supporting structure mounted on wheels. The trolleys of this type are used singularly or connected to each other, and they are pushed or drawn manually or by drawing vehicles for conveying pieces or components in an industrial plant, at various stations of an assembly line, for example a motor vehicle production line.

The object of the present invention is that of providing a trolley of the previously specified type which, besides being movable in a normal direction of movement, has an additional functionality, which enables moving the trolley according to a transverse direction orthogonal to the normal direction of movement, so as to enable positioning it near a station of the assembly line quickly and with a minimum space for manoeuvre.

A further object of the invention is that of providing a trolley having the previously mentioned additional functionality and at the same time having a steering capacity within a limited angular range when it is used for moving according to the normal direction of movement.

Still another object of the invention is that of providing a trolley having the previously specified characteristics further having a relatively simple structure and being inexpensive.

With the aim of attaining such objects, the Applicant had previously proposed, in the Italian patent application thereof T02009A000746 and in the corresponding European patent application EP10160171.4 (both still undisclosed as of date of priority of the present application), a conveying trolley for industrial plants, comprising a supporting structure mounted on wheels, characterised in that the wheels of the trolley are part of a plurality of wheel units pivotable around respective vertical axis, and in that said trolley further comprises:
- a plate for controlling the pivotable wheel units, pivotally mounted around a vertical axis on the supporting structure of the trolley and connected to the abovementioned pivotable wheel units by respective linkages, so that for each angular position of said control plate there is one determined angular position of each pivotable wheel unit, and
- a steering unit comprising a steering member pivotally mounted on the supporting structure of the trolley around the same axis of articulation of the abovementioned control plate, said steering member being rigidly connected to said control plate with respect to the rotational movement around said axis of articulation by an engagement member carried by the steering unit and adapted to be selectively inserted into a first hole or into a second hole of the abovementioned control plate. The abovementioned arrangement is such that when the abovementioned engagement member is inserted into the abovementioned first hole, all the wheels of the pivotable wheel units are oriented in a direction of normal movement of the trolley, with possibility of steering within a limited angle, whereas when said engagement member is inserted into said second hole of the control plate, all the wheels of the trolley are oriented according to a direction located at 90° with respect to the abovementioned normal direction of movement, to enable the movement of the trolley transverse to the abovementioned normal direction of movement.

The present invention has the object of providing a specific embodiment falling within the most general solution idea already proposed with the previous patent applications identified above.

According to such specific embodiment, the trolley is further characterised in that, in addition to said pivotable wheel units which are controlled by said plate by said linkages, said trolley further comprises one or more wheels, or wheel units, freely pivotable with respect to the supporting structure of the trolley.

Such solution maintains all the advantages of the previously proposed solution and makes the trolley easier to manoeuvre in given operating conditions.

Now, the invention shall be described with reference to the attached drawings, provided purely by way of non-limiting example, wherein:
figure 1 is a schematic perspective view showing two trolleys according to the previously proposed solution, connected to each other,
figure 2 is a perspective view of the supporting structure of a preferred embodiment of the trolley according to the previous proposal,
figure 3 is a schematic plan view showing the pivotable wheel units of the trolley of figures 1,2 oriented for movement in the normal direction of movement,
figures 4, 5 are views corresponding to those of figure 3 showing the steering capacity of the pivotable wheel units for a limited angle, to the left and to the right with respect to the normal direction of movement, during movement in such direction,
figure 6 is a further schematic plan view showing the trolley provided for the rotation of the pivotable wheel units towards the position oriented in the direction transverse to the normal direction of movement,
figure 7 is a further plan view showing the pivotable wheel units oriented in the direction transverse to the normal direction of movement,
figures 8, 9 are partial side and elevational views, partly sectioned, of the trolley proposed previously, respectively in the conditions illustrated in figure 3 and in figure 7, and
figure 10 is a variant of figure 7 referring to the trolley of the present invention.

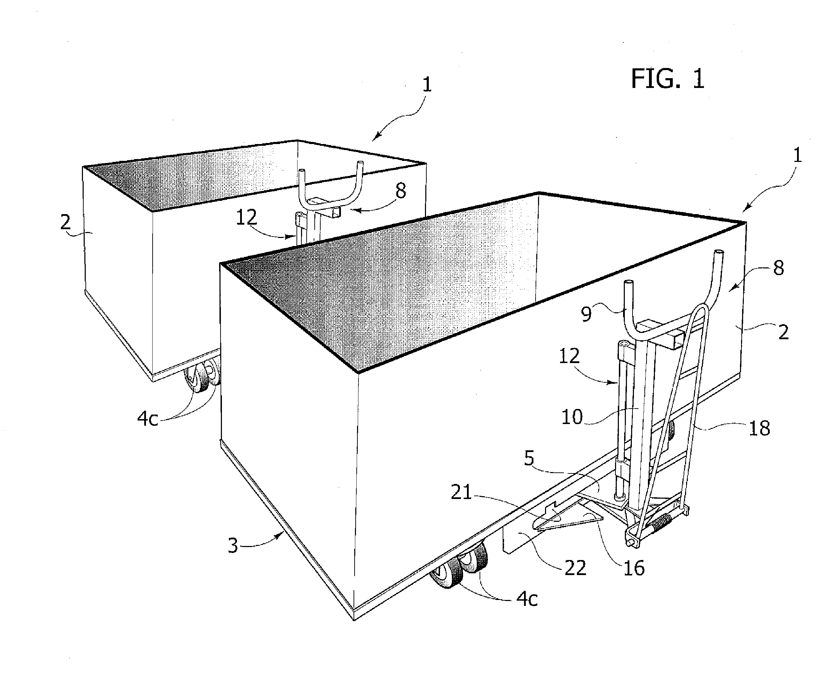

As indicated above, figures 1-9 of the attached drawings and the corresponding part of the description indicated below refer to the embodiment proposed previously with the previous patent applications identified above.

The present invention has a new embodiment falling within the most general solution idea presented with the previous applications, though having new specific characteristics which make it further advantageous.

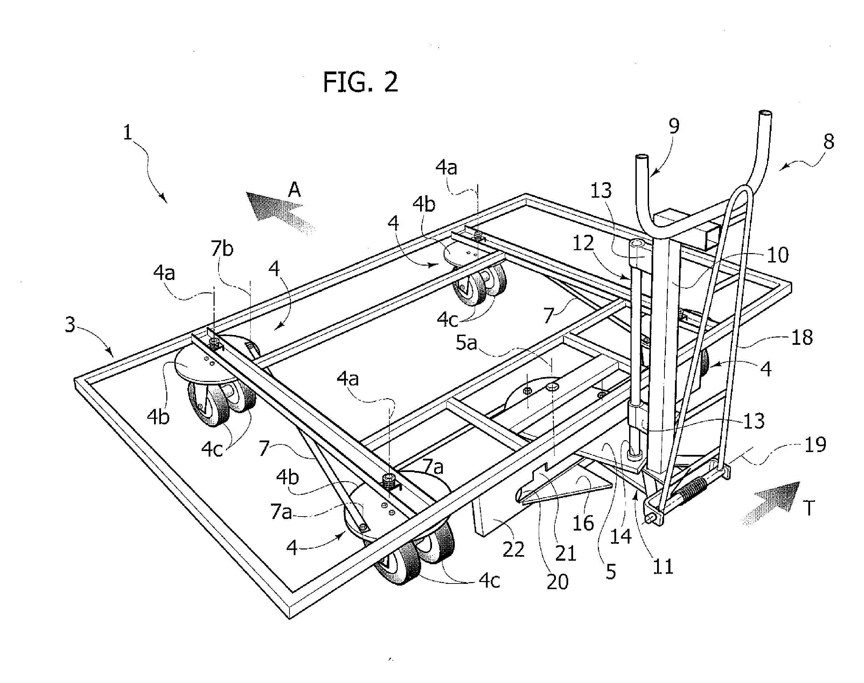

Two trolleys, each comprising a container 2 intended to receive pieces or components to be conveyed in an industrial plant are indicated in their entirety with 1 in figure 1. The structure and configuration of the container 2 can be of any type. The container 2 is mounted on a supporting structure 3 better observable in figure 2 (where the container was removed). In the illustrated example the supporting structure 3 is constituted by a metal frame mounted on four wheel units 4 mounted pivotable around respective vertical axis 4a. The illustrated example shows four pivotable wheel units, but a greater number, or even a lower number (for example three) of wheel units can be provided for. In the case of the illustrated example, the four axes 4a of the pivotable wheel units 4 are advantageously aligned two by two with respect to each other both in the normal direction of movement of the trolley, indicated with A in figure 2 and in a transverse direction located at 90° with respect to the direction A and indicated with T in the figure 2. Again in the case of the illustrated example, each unit 4 comprises a pair of twinned wheels 4b which are supported freely rotatable by arms projecting at the lower part from an upper support plate 4b, which is pivotally mounted in the frame constituting the supporting structure 3. It is however clear that each unit 4 could for example comprise a single wheel 4b and that also the means for pivotally supporting the wheel or the wheels of each unit with respect to the frame 3 can also be of any type.

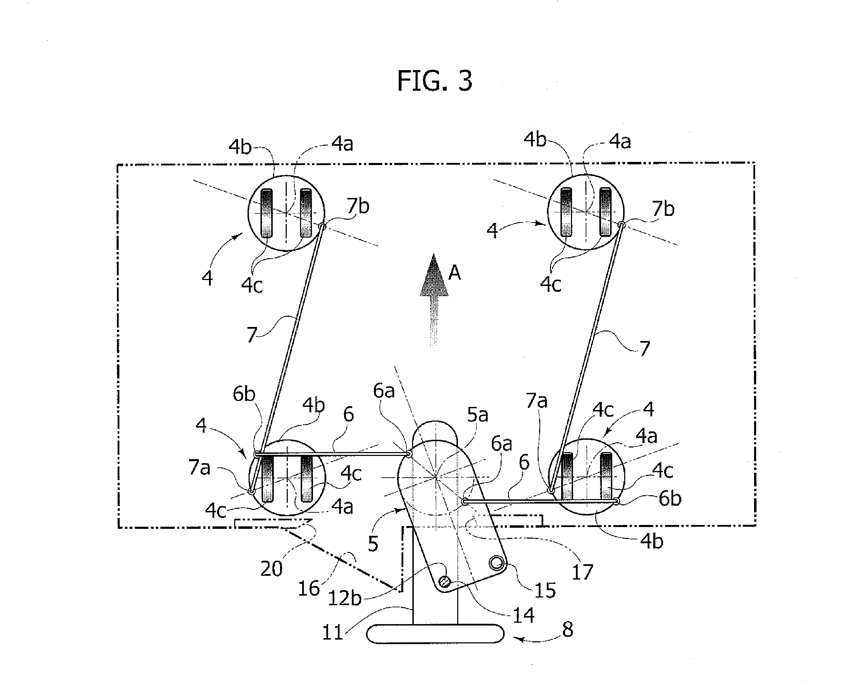

The angular position of each pivotable wheel unit 4 is controlled uniquely by a single control plate 5 which is pivotally mounted on the frame 3 around a vertical axis 5a. As observable for example in figures 2 and 3, the control plate 5 is connected to the four pivotable wheel units 4 by pantograph linkages. In particular, with reference to figure 3, two pairs of pivoted arms 6, 7 are provided for. The two arms 6 each have an end 6a thereof pivoted around a vertical axis to the control plate at an equal distance with respect to the axis 5a. The opposite end 6b of the arms 6 are pivoted to the plates 4b of the pivotable units arranged on the front side of the trolley (i.e. the lower side in figure 3). The other pair of pivoted arms 7 connects the plates 4b of the two units 4 arranged on the front side of the trolley with the plates 4b of the two units 4 arranged on the rear side (i.e. the upper side in figure 3). Each pivoted arm 7 has an end 7a pivoted around a vertical axis to the plate 4b of a unit 4 on the front side of the trolley, the axes of articulation of the end 6b and 7a being arranged equally spaced from the axes 4a of the pivoting unit.

The abovementioned arrangement is configured and dimensioned so that for each position of the control plate 5 there is one and only one angular position of each pivoting unit 4, according to a criterion that shall be clear hereinafter.

Still with reference to figure 2, the trolley 1 comprises a steering unit 8 including a handlebar 9, which can obviously be configured in any manner, carried at the upper end of an upright 10 whose lower end is secured to a steering member 11. The steering member 11 is constituted by a horizontal plate with substantially elongated shape which is arranged below the control plate 5 and also mounted pivoted on the frame 3 of the trolley around the same axis of articulation 5a of the control plate 5, in an entirely independent manner with respect to the plate 5.

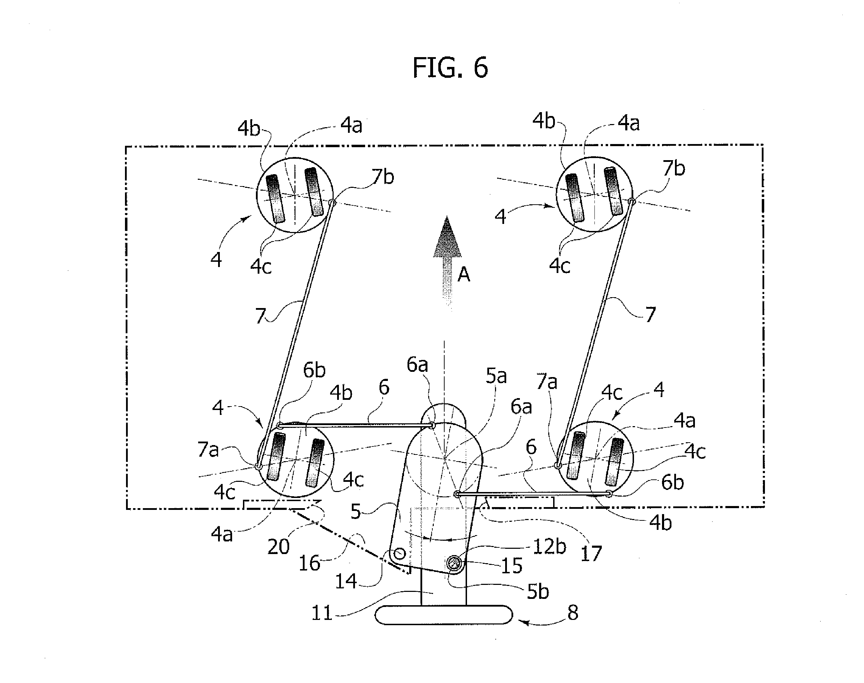

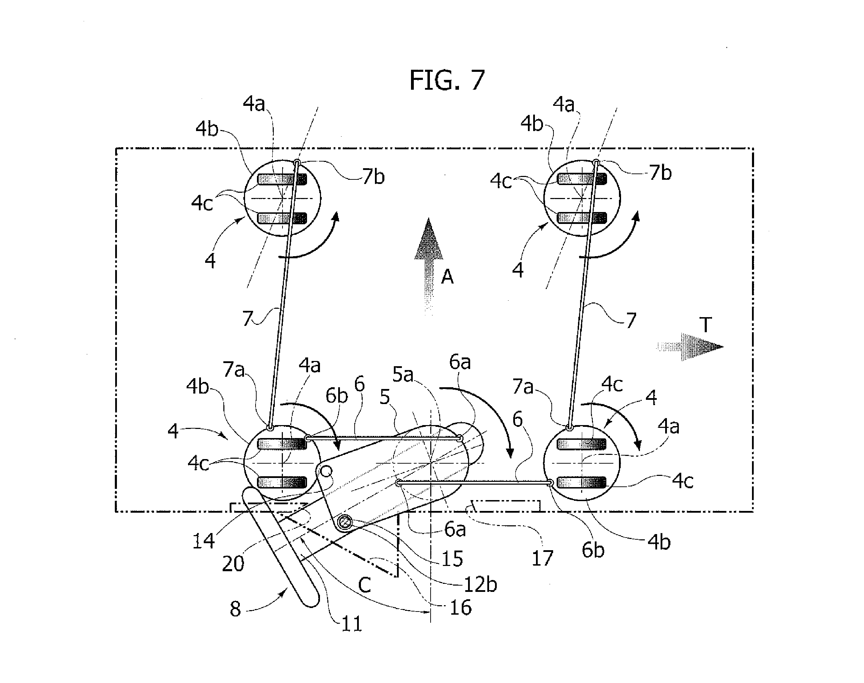

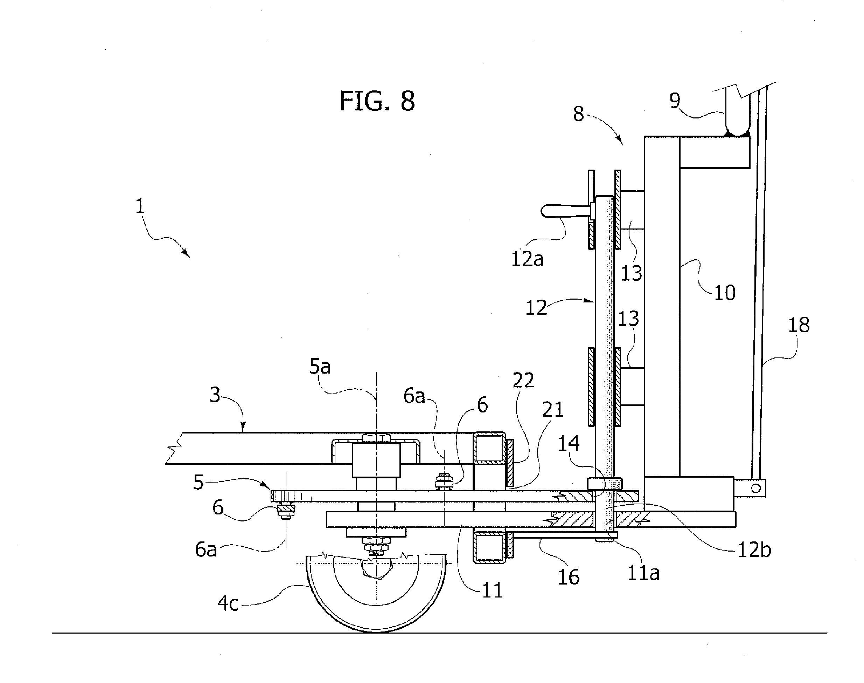

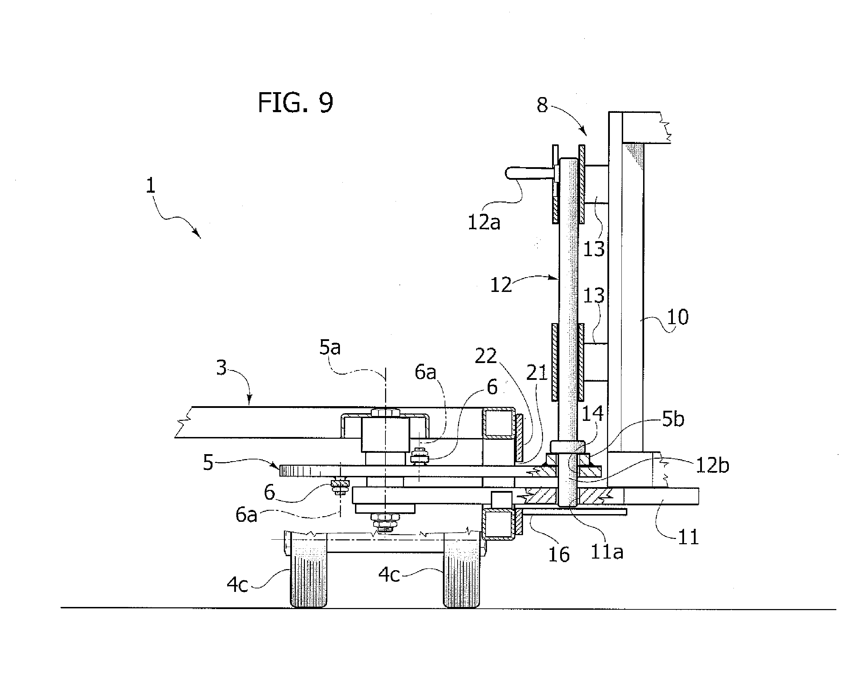

The control plate 5 and the steering member 11 can be made integral to each other with respect to the rotational movement around the axis of articulation 5a by an engagement member 12 (still see figure 2), which in the illustrated example is constituted by a vertical cylindrical rod vertically slidably supported by supports 13 projecting cantilevered from the upright 10 (also see figures 8, 9). With reference to such figures, the rod 12 is provided at the upper part of a handgrip 12a which enables manoeuvring the rod between a raised position and a lowered position. In the abovementioned lowered position, the lower end 12b of the vertical rod 12 is adapted to selectively engage any of two holes 14, 15 obtained in the control plate 5 equally spaced from the axis of articulation 5a. It should however be observed, with reference to figures 8, 9 that when the rod 12 is introduced into the hole 14 of the plate 5 it is capable of also traversing a hole 11a obtained in the steering plate 11 and projecting below the latter as observable in figure 8. On the contrary, when the rod 12 is introduced into the hole 15 (condition illustrated in figures 6, 7) it is engaged in the hole 11a of the steering plate 11 (figure 9) again but it is not capable of projecting by a appreciable distance below the plate 11, in that a collar 12b of the rod 12 abuts against a spacer ring 5b welded on the plate 5 coaxially to the hole 15.

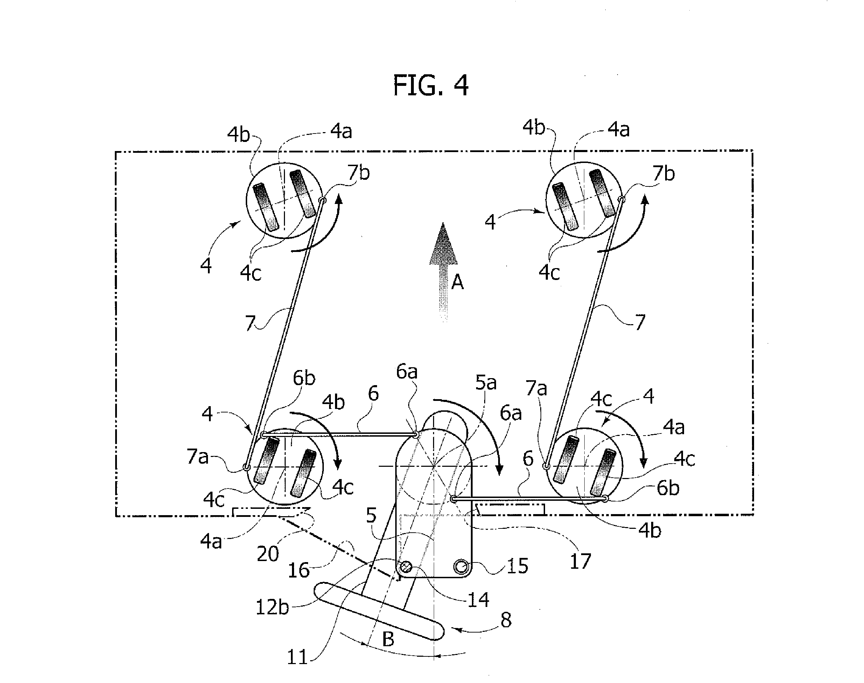

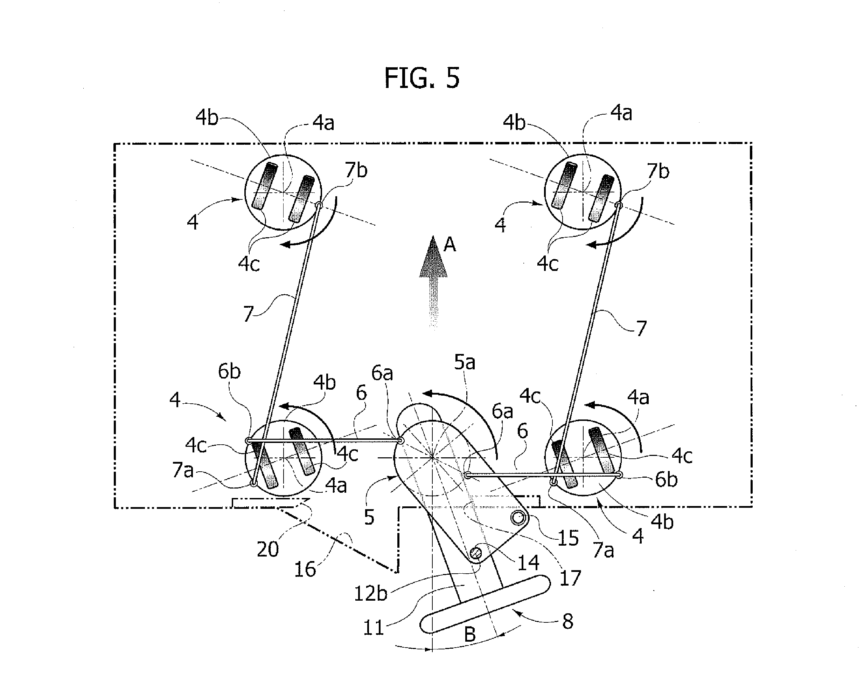

With reference to figure 3, when the rod 12 is engaged within the hole 14 of the control plate 5, as well as in the hole 11a of the steering plate 11, the control plate 5 and steering plate 11 are integral to each other with respect to the rotation around the axis 5a, the relative positioning of the two plates being such that when the steering unit 8 is aligned straight in the normal direction of movement A, the pivotable wheel units 4 have the wheels thereof aligned in the direction A, so as to enable the normal movement of the trolley in such direction. However, in such operating mode the steering unit 8 can be moved left or right with respect to the aligned central position of figure 3 (see figures 4, 5) within a limited angular range (±20° in the case of the illustrated example). Such result is obtained in that the left end stop position of the steering unit 8 (see figure 4) is defined by the engagement of the lower end of the rod 12 (which in this case projects below the plate 11, as indicated above) against a stop plate 16 clearly illustrated in figures 2, 8 and also indicated schematically in figures 3-5. As observable, in such end stop condition, visible in figure 4, the steering unit is rotated to the left by an angle B, which as mentioned is equivalent to 20° in the case of the illustrated example. Still with reference to the mode of operation with the rod 12 engaged in the hole 14, the steering unit 8 can be moved to the right up to an end stop position observable in figure 5, defined by the engagement of the right edge (with reference to the figure) of the steering plate 11 against a stop surface 17 defined by the frame 3.

As clearly observable in figures 4, 5, in the abovementioned mode of movement of the trolley in the direction A, the wheels of the pivotable units can be steered by an angle B, to the right and left with respect to the direction A, such angle being equivalent to 20° in the case of the illustrated example. Such possibility of steering obviously enables manoeuvring the trolley optimally when it is moved in the direction A, singularly or coupled to other trolleys.

Figure 2 also shows a structure 18 for hooking the trolley to an adjacent trolley, pivotally mounted on the base thereof around a horizontal axis 19 on the structure of the steering unit, so as to be movable between an operative raised position (illustrated in figure 2) and an operative lowered position in which it can be hooked to another trolley, with means of any type.

Should the trolley be translated in a direction T orthogonal to the normal direction of movement A, the rod 12 is raised to remove it from the hole 14 of the control plate 5 and the steering unit is moved to align the hole 11a of the steering plate 11 with the hole 15 of the control plate 5. In such condition, illustrated in figure 6, the rod 12 is lowered again until it reaches the position illustrated in figure 9, in which the control plate 5 and the steering plate 11 are once again integral to each other with respect to the rotational movement around the axis of articulation 5a. However, in such condition the steering unit 8 can be rotated over the entire angular range indicated with C in figure 7, so as to bring it to the position illustrated in figure 6 at the end stop position illustrated in figure 7 defined by the engagement of the left edge (with reference to figure 7) of the steering plate 11 against a stop surface 20 defined by the frame 3, illustrated schematically in figures 3-7 and better observable in figure 2. In the case of the illustrated example both the stop surface 20 and the stop surface 17 are defined by the ends of a slit 21 (figure 2) obtained in a plate 22 arranged on the front side of the frame 3, the slit 21 being traversed by the plates 5 and 11, as clearly illustrated in figures 2 and 8, 9.

As clear from the description above, the trolley can be provided for a first operating mode, for movement in the normal direction of movement, or in a second operating mode, in which the wheels are oriented to translate the trolley in a direction orthogonal with respect to the normal direction of movement. Thus, upon reaching the destination within the industrial plant, the trolley can be translated transversely, with ensuing saving of time and space for manoeuvre. Furthermore, in the normal operating mode, the trolley however has the possibility of steering within a limited angle, for example by 20° to the right and left with respect to the direction of movement. All abovementioned results are attained by means of an extremely simple, reliable and inexpensive structure.

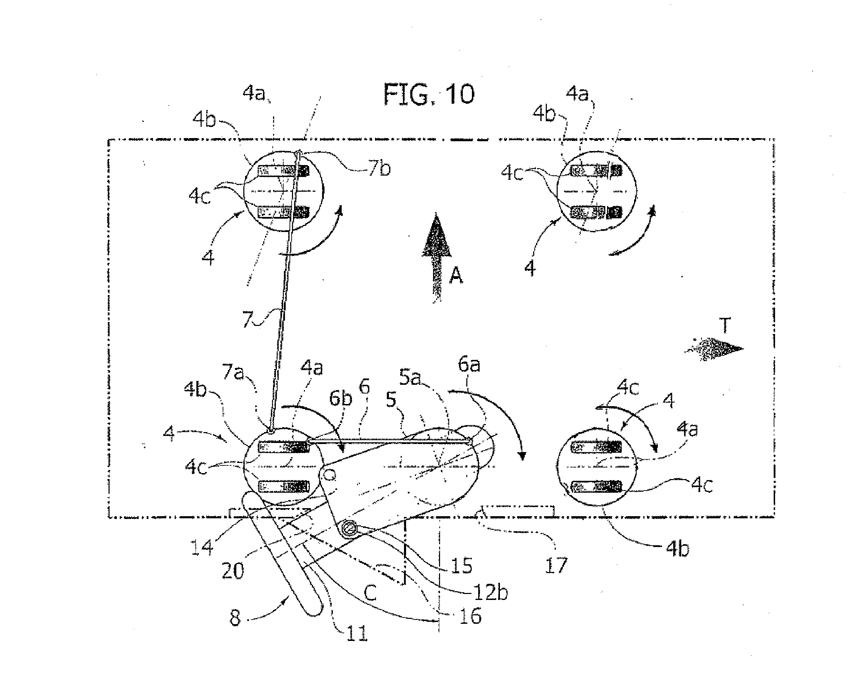

Figure 10 shows a variant of figure 7 which refers to the embodiment forming an object of the present invention. According to the new invention, the trolley, besides the pivotable wheel units which are controlled by the plate 5 by the linkages 6 and 7, further comprises one or more wheels, or wheel units 4' which are freely pivotable with respect to the supporting structure of the trolley. This makes the trolley even easier to manoeuvre in given operating conditions.

In the illustrated specific example, the further wheel units 4' which are freely pivotable are two and they are arranged at the apices of a theoretical quadrilateral whose two other vertices are occupied by the wheel units 4 connected to said linkages, the sides of the quadrilateral being oriented in the normal direction of movement (A) of the trolley and in the transverse direction (T) of the trolley.

Obviously, without prejudice to the principle of the invention, the construction details and the embodiments may widely vary with respect to what has been described and illustrated purely by way of example, without departing from the scope of protection of the present invention.

## Claims

1. Trolley for conveying pieces or components in an industrial plant, comprising a supporting structure (3) mounted on wheels (4c),
**characterised in that**:
- some wheels (4c) of the trolley are part of a plurality of wheel units (4) pivotable around respective vertical axis (4a),
**in that** said trolley further comprises:
- a control plate (5) for controlling the pivotable wheel units (4), pivotally mounted around a vertical axis (5a) on the supporting structure (3) of the trolley and connected to the pivotable wheel units (4) by respective linkages (6, 7), so that for each angular position of the control plate (5) there is a determined angular position of each pivotable wheel unit (4), and
- a steering unit (8) comprising a steering member (11) pivotally mounted on the supporting structure (3) of the trolley (1) around the same axis of articulation (5a) of the control plate (5),
- said steering unit (8) being adapted to be rigidly connected to said control plate (5) with respect to the rotational movement around said axis of articulation (5a) by an engagement member (12) carried by the steering unit (8) and adapted to be selectively inserted into a first hole (14) or into a second hole of the control plate (5),
- said arrangement being such that:
- when said engagement member (12) is inserted into said first hole (14) the wheels (4c) of the pivotable units (4) are oriented in the normal direction of movement (A) of the trolley, with possibility of steering within a limited angle, and
- when said engagement member (12) is inserted into said second hole (15), the steering member can be brought to a position in which the wheels of the pivotable units (4) are oriented in a direction (T) located at 90° with respect to said normal direction of movement (A) of the trolley, to enable a translation of the trolley in said transverse direction (T),
said trolley being further **characterised in that**, in addition to said pivotable wheel units (4) which are controlled by said plate by said linkages, said trolley further comprises one or more wheels, or wheel units (4'), freely pivotable with respect to the supporting structure of the trolley.

2. Trolley according to claim 1, **characterised in that** said steering member is constituted by a plate (11) arranged below the control plate (5) and **in that** said engagement member (12) traverses a hole (11a) of said steering plate (11) when it is in the position of engaging the control plate (5), be it in the first hole (14), or in the second hole (15).

3. Trolley according to claim 2, **characterised in that** said engagement member is constituted by a vertical rod (12) and **in that** when it is engaged within said first hole (14) it has the lower end thereof projecting below said steering plate (11), whereas when the engagement member (12) is engaged within said second hole (15), the lower end thereof does not project appreciably below the steering plate (11).

4. Trolley according to claim 3, **characterised in that** when said engagement rod (12) is engaged within said first hole (14), the lower end thereof projecting below the steering plate (11) is adapted to cooperate with an end stop (16) carried by the frame (3) of the trolley, so as to limit the angular steering range in the mode of movement of the trolley in the normal direction of movement (A), whereas when the engagement rod (12) is introduced into said second hole (15), the lower end thereof is out of range of interference with said stop member (16), hence the steering unit (8) can be rotated for an angular range sufficient to cause the rotation of the pivotable wheel units (4) up to the position in which the wheels (4c) are aligned in the transverse direction of movement (T).

5. Trolley according to claim 1, **characterised in that** said further wheel units (4') which are freely pivotable are two and are arranged at the apices of a theoretical quadrilateral whose two other vertices are occupied by the wheel units connected to said linkages, the sides of the quadrilateral being oriented in the normal direction of movement (A) of the trolley and in the transverse direction (T) of the trolley.
